# EUROPÄISCHE PATENTSCHRIFT

(11) **EP 1 151 900 B1**
(45) Veröffentlichungstag und Bekanntmachung des Hinweises auf die Patenterteilung: **22.09.2004**
(21) Anmeldenummer: 01107992.8
(22) Anmeldetag: 29.03.2001
(51) Int. Cl.: B60T 7/04, B60T 11/04, B60T 11/06

(54) **Fussfeststellbremse**
Foot-actuated parking brake
Frein de stationnement à pédale

(30) Priorität: 05.05.2000 DE 10021982
(43) Veröffentlichungstag der Anmeldung: 07.11.2001
(73) Patentinhaber: Dr.Ing. h.c.F. Porsche Aktiengesellschaft, 70435 Stuttgart (DE)
(72) Erfinder: Grundke, Edgar, 71254 Ditzingen (DE)

(56) Entgegenhaltungen:
- DE-A- 3 408 058
- FR-A- 652 282
- US-A- 2 113 435

## Beschreibung

Die Erfindung bezieht sich auf eine Fußfeststellbremse nach dem Oberbegriff des Anspruchs 1.

Aus der DE 34 08 058 A1 ist eine Betätigungsvorrichtung für eine Feststellbremse in Kraftfahrzeugen bekannt, die auf ein Bremsbetätigungsorgan einwirkende Schwenkhebel umfaßt, welche mit zu den Radbremsen führenden Zugseilen verbunden sind. Aus der US-A-2,113,435 ist eine Bremseinrichtung mit Bowden- bzw. Seilenzügen bekannt, bei der an einem Verbindungselement jeweils endseitig Schwenkhebel für Bowden- und Seilzüge angeordnet sind. Über ein Pedal, das mit dem Verbindungselement verbunden ist, erfolgt eine Betätigung der Bremseinrichtung. Aus der FR-A-652 282 ist eine Bremseinrichtung bekannt, bei der an einem Ende eines Verbindungselements ein Schwenkhebel angeordnet ist, der mit einem Hebel verbunden ist, an dem Bowden- und Seilzüge gehalten werden. Mit dem Verbindungselement ist ein Pedal der Bremseinrichtung verbunden, welches eine Verdrehung des Verbindungselements zur Bremsung bewirkt.

Aufgabe der Erfindung ist es, eine Fußfeststellbremse für ein Kraftfahrzeug mit einem Verbindungselement für die Seile zwischen einem Fußpedal der Feststellbremse und den beiden Bremsen der Räder zu schaffen, das in einfacher Weise im Fahrzeug montierbar ist und eine übersetzte Betätigung der Fußpedalkraft auf die Bremsen sicherstellt.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch das Verbindungselement ein kompaktes Bauteil zwischen dem Pedal und den beiden hinteren Radbremsen geschaffen wird, welches das vom Pedal kommende Seil mit dem nach hinten zu den Radbremsen führenden Seilen kraftübertragend verbindet. Das Verbindungselement ist mit einer Schwenkhebellagerung verbunden, die in einem Hülsenteil einen Lagerbolzen für beidseitig angeordnete Schwenkhebel aufweist. Einer dieser Schwenkhebel ist mit dem Seilzug der Fußfeststellbremse und der andere Seilzug ist mit einer Zugstange für die Bremseinrichtungen der Räder verbunden.

Damit eine optimale Kraftübertragung von einem zum anderen Schwenkhebel und somit zu den Seilen erfolgen kann, besteht das Verbindungselement aus einem U-förmigen Trägerteil mit in Einbaulage vom Steg abwärts ausgerichteten Schenkeln. Das Hülsenteil erstreckt sich querliegend zu den Schenkeln und ist teilweise freiliegend oberhalb des Steges in einer beispielsweisen halbkreisförmigen Einformung mittels einer Schweißung befestigt. Die Verbindung des Hülsenteils mit dem Verbindungselement kann auch in anderer Weise erfolgen.

Damit eine einfache Montage des Verbindungselements im Fahrzeugaufbau gewährleistet ist, weist es an seinem einen Schenkel eine Abstellung auf, die mit einer am Mitteltunnel des Fahrzeugs befestigten Aufnahmeplatte verbunden wird. Der weitere Schenkel des Verbindungselements wird an einer Seite des Mitteltunnels bzw. des Fahrzeugaufbaus festgelegt, so daß über diese Befestigungen eine einfache Möglichkeit der Montage und Demontage ermöglicht wird.

Die Schwenkhebel des Verbindungselements sind an einem im Hülsenteil gelagerten Lagerbolzen gehalten. Damit eine verschiedene Winkellage der beiden unterschiedlich langen Schwenkhebel zueinander zwecks einer optimalen Übersetzung einstellbar ist, ist der eine Schwenkhebel auf einer polygonalen Ausformung bzw. auf einem Sechskant am freien Bolzenende entsprechend aufsteckbar, wozu der Schwenkhebel eine korrespondierende polygonale Aufnahmebohrung aufweist.

Zur Verwendung des Verbindungselements für ein Rechts- und ein Linkslenkerfahrzeug gleichermaßen, ist es mit zwei Abwinklungen an seinem Schenkel versehen, die über einen Winkel zueinander angeordnet sind, so daß in der einen Abwinklung das vom Bremspedal abgehende Seil bei einem Linkslenkerfahrzeug und in die andere Abwinklung das vom Bremspedal abgehende Seil bei einem Rechtslenkerfahrzeug eingehängt werden kann. Das Verbindungselement wird zur Verwendung für diese beiden Fahrzeuge einfach um 180° gedreht.

Damit eine Einführung der Bowdenzüge von den Radbremsen zum Verbindungselement ohne Abknickung erfolgen kann, werden die Bowdenzüge über ein Führungsteil dem Verbindungselement bzw. der Aufnahmeplatte zugeführt. Hierzu ist die Führungsplatte am hinteren Ende der Aufnahmeplatte vorgesehen und über seitliche Nocken in Aussparungen der Aufnahmeplatte gehalten und eine Befestigung am Mitteltunnel erfolgt über mindestens einen Haken am Führungsteil.

Ein Ausführungsbeispiel der Erfindung ist in den Zeichnungen dargestellt und wird im Folgenden näher beschrieben.

Es zeigen:
- Fig. 1: eine schaubildliche Darstellung des Verbindungselements mit Bowden- und Seilzügen zu den Bremsen und zum Bremspedal,
- Fig. 2: eine Seitenansicht auf das Verbindungselement in Pfeilrichtung Z der Fig. 1 gesehen,
- Fig. 3: eine schaubildliche Darstellung des Verbindungselements von hinten in Fahrtrichtung F des Fahrzeugs gesehen,

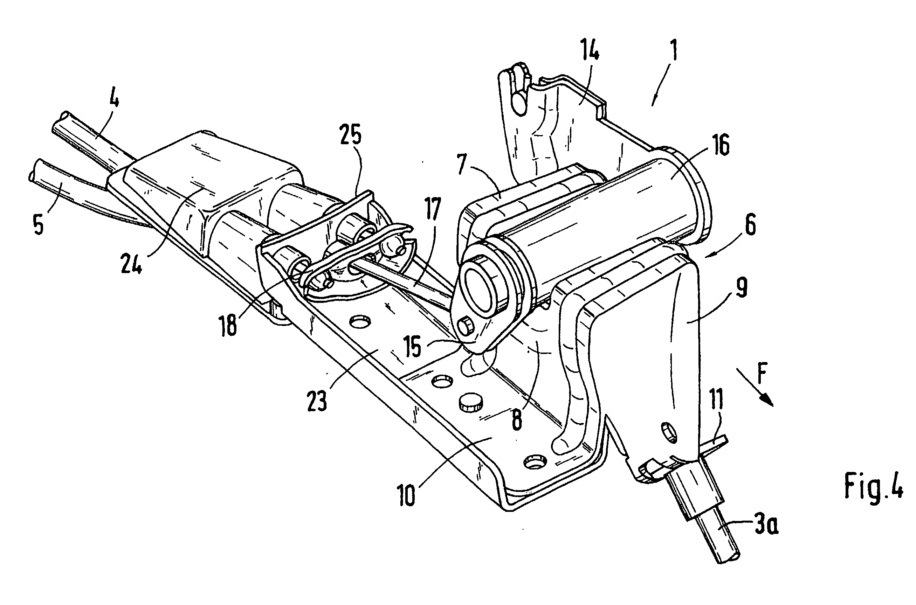

- Fig. 4: eine schaubildliche Darstellung des Verbindungselements von vorn entgegen der Fahrtrichtung F des Fahrzeugs gesehen und
- Fig. 5: eine schaubildliche Darstellung des Verbindungselments mit demontierten Lagerbolzen und einem Schwenkhebel.

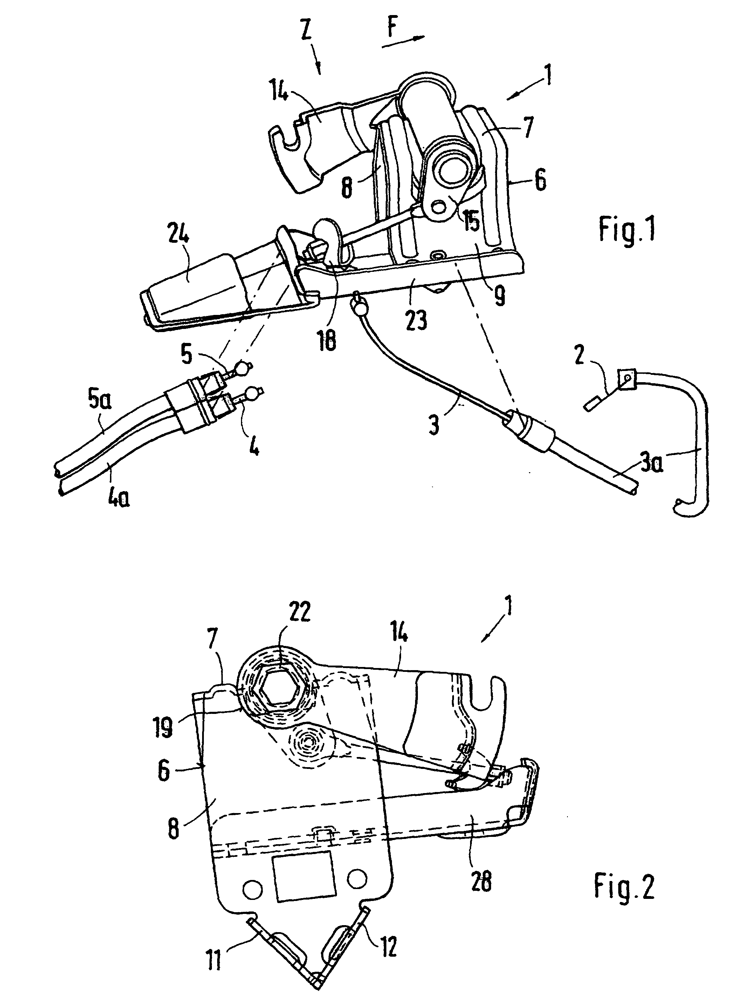

Ein Verbindungselement 1 für eine Fußfeststellbremse ist beispielsweise in Fig. 1 näher dargestellt, wobei das Bremspedal 2 mit dem Seilzug 3 sowie die zu den hinteren Radbremsen führenden Seilen 4, 5 schematisch dargestellt sind.

Das Verbindungselement 1 besteht vorzugsweise aus einem U-förmigen Trägerteil 6, das mit einem Steg 7 sowie zwei abgewinkelten Schenkeln 8, 9 und einer Abstellung 10 zur Befestigung an einem Mitteltunnel bzw. an einem Aufbauteil des Fahrzeugs besteht. Desweiteren weist das Trägerteil 6 zwei winkelförmig zueinander angeordnete Abwinklungen 11, 12 zur wahlweisen Abstützung eines Bowdenzuges 3a für das Seil 3 auf.

Mit dem Steg 7 des Trägerteils 6 ist eine Hülse 16 zur Lagerung eines Bolzens 13 für zwei Schwenkhebel 14, 15 verbunden. Mit dem einen Schwenkhebel 14 ist der vom Pedal 2 kommende Seilzug 3 und mit dem weiteren Schwenkhebel 15 ist eine Zugstange 17 verbunden, an welcher die zu den beiden Bremsen am Hinterrad geführten Seile 4, 5 über ein Verbindungsstück 18 eingehängt verbunden sind.

Die Hülse 16 ist in einer Einformung 19 - die beispielsweise halbkreisförmig ausgeführt sein kann - des Stegs 7 des Verbindungselements 1 gehalten und über eine Schweißung festgelegt. Der Lagerbolzen 13 wird zur Montage fest mit dem einen Schwenkhebel 15 verbunden und durch die Hülse 16 gesteckt und am durchgeführten freien Ende 20 mit dem weiteren Schwenkhebel 14 fest verbunden.

Damit eine Verdrehsicherung des Schwenkhebels 14 auf dem Lagerbolzen 13 gewährleistet ist, weist das freie Ende 20 eine polygonale Anformung 22 auf, beispielsweise ein Sechskant, auf dem der Schwenkhebel 14 mit einer entsprechend ausgeführten Sechskantbohrung 21 gehalten ist. Durch die Lage des Schwenkhebels 14 zum Schwenkhebel 15 kann eine entsprechende Einstellung zur Betätigung der Bremsen vorgenommen werden. Nach dem Aufsetzen des Schwenkhebels 14 auf den Lagerbolzen 13 kann eine Festlegung beispielsweise über eine Schweißung vorgenommen werden.

Das Verbindungselement 1 wird über die Abstellung 10 mit einer Aufnahmeplatte 23 verbunden, die am Mitteltunnel festgesetzt wird und als Versteifung dient. Eine weitere Befestigung des Verbindungselements 1 erfolgt über den Schenkel 8 am Mitteltunnel bzw. am Aufbau, was nicht näher dargestellt ist.

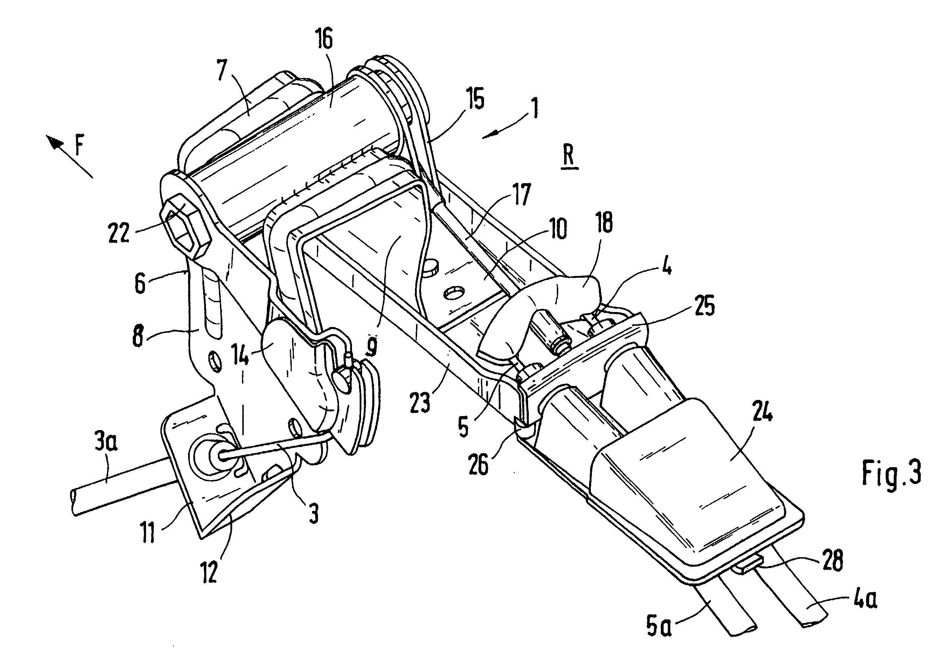

In den Zeichnungen ist das Verbindungselement 1 für ein Linkslenkerfahrzeug dargestellt. Bei einem Rechtslenkerfahrzeug wird das Verbindungselement 1 gemäß Fig. 3 um 180° gedreht, so daß der Schwenkhebel 14 in der Fahrzeugseite R steht. Die Abstützung des Bowdenzuges 3a erfolgt statt in der Abwinklung 11 des Verbindungselementes 1 in der weiteren Abwinklung 12. Die Welle 22 wird gespiegelt verbaut und der Hebel 14 in auf den Rechtslenker angepaßter Position an der Welle befestigt.

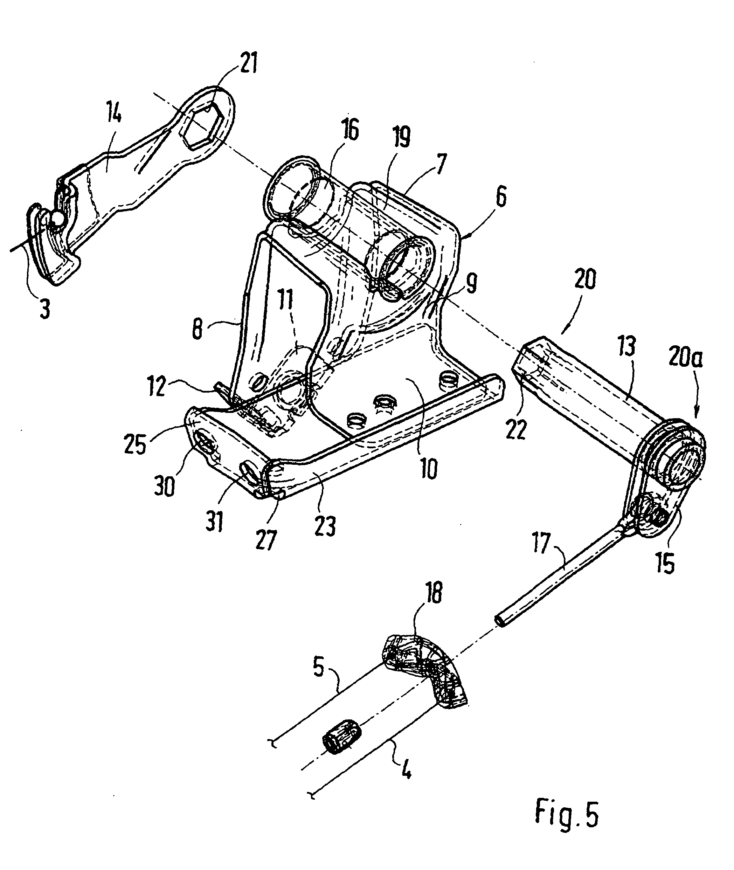

Mit der Aufnahmeplatte 23 ist ein Führungsteil 24 verbunden in dem die Bowdenzüge 4a, 5a der Seile 4, 5 bis zum Eingang in die Aufnahmeplatte 23 gerade geführt sind und sich in einem Quersteg 25 in Bohrungen 30, 31 der Platte 23 abstützen. Das Führungsteil 24 ist über eckseitige Nocken 26 (Fig. 3), die in korrespondierende Ausnehmungen 27 (Fig. 5) eingreifen, lagegesichert gehalten. Ein Einhaken in den Mitteltunnel erfolgt über ein endseitiges Hakenelement 28.

## Patentansprüche

1. Fußfeststellbremse für Fahrzeuge mit an den Hinterrädern angeordneten Bremseinrichtungen, die jeweils von einem Pedal über Bowden- und Seilzüge (3, 3a, 4, 4a, 5, 5a) betätigbar sind und zwischen dem Pedal (2) und den Bremseinrichtungen ein Verbindungselement (1) angeordnet und das mit den Bowden- und Seilzügen verbunden ist, und das Verbindungselement (1) eine Schwenkhebellagerung (13, 16) umfasst, die in einem Hülsenteil (16) einen Lagerbolzen (13) für Schwenkhebel aufweist, **dadurch gekennzeichnet, dass** beidseitig des Lagerbolzens (13) angeordnete Schwenkhebel (14, 15) angeordnet sind, wobei der eine Schwenkhebel (14) mit dem Bowden- und Seilzug (3, 3a) der Fußfeststellbremse und die anderen Bowden- und Seilzüge (4, 4a, 5, 5a) über ein Verbindungsstück (18) mit einer Zugstange (17) für die Bremseinrichtungen verbunden sind.

2. Fußfeststellbremse nach Anspruch 1, **dadurch gekennzeichnet, daß** das Verbindungselement (1) aus einem U-förmigen Trägerteil (6) mit in Einbaulage von einem Steg (7) abwärts ausgerichteten Schenkeln (8, 9) besteht, wobei das Hülsenteil (16) sich querliegend zu den Schenkeln (8, 9) erstreckt und teilweise freiliegend oberhalb des Stegs (7) in einer Einformung (19) befestigt ist.

3. Fußfeststellbremse nach den Ansprüchen 1 oder 2, **dadurch gekennzeichnet, daß** das Verbindungselement (1) an seinem einen Schenkel (9) eine Abstellung (10) zur Befestigung mit einer Aufnahmeplatte (23) an einem Mitteltunnel des Fahrzeugaufbaus aufweist und der weitere Schenkel (8) unmittelbar am Mitteltunnel befestigbar ist und erste und zweite Abwinklungen (11, 12) am Schenkel (8) zur Festlegung eines Bowdenund Seilzuges (3, 3a) für das mit dem Pedal (2) verbundene Seil (3) aufweist, das im beabstandet zur Abwinklung (11, 12) angeordneten Schwenkhebel (14) einhängbar ist.

4. Fußfeststellbremse nach den Ansprüchen 1, 2 oder 3, **dadurch gekennzeichnet, daß** der Lagerbolzen (13) zur Montage an seinem einen freien Ende (20a) mit dem Schwenkhebel (15) für die Zugstange (17) verbunden ist und an seinem anderen gegenüberstehenden freien Ende (20) eine polygonale Anformung (22) aufweist, auf welcher der Schwenkhebel (14) mit einer entsprechend polygonal ausgebildeten Bohrung (21) gehalten und festgesetzt ist.

5. Fußfeststellbremse nach einem oder mehreren der vorhergehenden Ansprüche, **dadurch gekennzeichnet, daß** die Aufnahmeplatte (23) an einem freien Ende in einen Quersteg (25) Aufnahmebohrungen (30, 31) für die Bowdenzüge (4a, 5a) der zu den beiden Bremsen führenden Seile (4, 5) aufweist, die in dem Verbindungsstück (18) gehalten sind, das an der Zugstange (17) befestigt ist.

6. Fußfeststellbremse nach den Ansprüchen 1 oder 5, **dadurch gekennzeichnet, daß** die Aufnahmeplatte (23) mit einem Führungsteil (24) für die Bowdenzüge (4a, 5a) versehen ist, das am hinteren Ende der Aufnahmeplatte (23) über seitliche Nocken (26) in Aussparungen (27) der Aufnahmeplatte (23) einsetzbar ist und zur Festlegung am Mitteltunnel mit mindestens einem Haken (28) versehen ist, der in eine korrespondierende Ausnehmung im Mitteltunnel einhängbar ist.

7. Fußfeststellbremse nach einem oder mehreren der vorhergehenden Ansprüche, **dadurch gekennzeichnet, daß** das Verbindungselement (1) für ein Rechts- und Linkslenkerfahrzeug verwendbar ist, derart, daß das Verbindungselement (1) für das Rechtslenkerfahrzeug um 180° verdreht über die Abstellung (10) mit der Aufnahmeplatte (23) verbindbar ist und der Bowdenzug (3a) des Seils (3) des Pedals (2) in der zweiten Abstellung (12) abgestützt ist, die zur ersten Abstellung (11) für das Linkslenkerfahrzeug unter einem Winkel angestellt ist.

## Claims

1. A foot-actuated parking brake for vehicles with braking devices which are arranged on the rear wheels and which can be actuated in each case by a pedal by way of Bowden and traction wires (3, 3a, 4, 4a, 5, 5a), and a connecting element (1) is arranged between the pedal (2) and the braking devices, and which connecting element (1) is connected to the Bowden and traction wires, and the connecting element (1) comprises a pivot-lever mounting (13, 16) which in a sleeve part (16) has a bearing pin (13) for pivot levers, **characterized in that** pivot levers (14, 15) are arranged on both sides of the bearing pin (13), wherein one pivot lever (14) is connected to the Bowden and traction wire (3, 3a) of the foot-actuated parking brake and the other Bowden and traction wires (4, 4a, 5, 5a) are connected by way of a connexion member (18) to a pull rod (17) for the braking devices.

2. A foot-actuated parking brake according to Claim 1, **characterized in that** the connecting element (1) comprises a U-shaped support part (6) with side members (8, 9) directed downwards from a web (7) in the fitted position, wherein the sleeve part (16) extends transversely to the side members (8, 9) and is fastened in a partly overhung manner above the web (7) in a recessed portion (19).

3. A foot-actuated parking brake according to Claims 1 or 2, **characterized in that** one (9) of the side members of the connecting element (1) has a projecting portion (10) for fastening to a receiving plate (23) on a central tunnel of the vehicle body and the further side member (8) can be fastened directly to the central tunnel and has first and second angled portions (11, 12) on the side member (8) for fastening a Bowden and traction wire (3, 3a) for the cable (3) which is connected to the pedal (2) and which can be suspended in the pivot lever (14) arranged at a distance from the angled portion (11, 12).

4. A foot-actuated parking brake according to Claims 1, 2 or 3, **characterized in that** for mounting purposes the bearing pin (13) is connected at one (20a) of its free ends to the pivot lever (15) for the pull rod (17) and at its other opposite free end (20) has a polygonal integral attachment (22) on which the pivot lever (14) is held and fixed with a bore (21) formed in a correspondingly polygonal manner.

5. A foot-actuated parking brake according to one or more of the preceding Claims, **characterized in that** at a free end in a transverse web (25) the receiving plate (23) has receiving bores (30, 31) for the Bowden wires (4a, 5a) of the cables (4, 5) which lead to the two brakes and which are held in the connexion member (18) which is fastened to the pull rod (17).

6. A foot-actuated parking brake according to Claims 1 or 5, **characterized in that** the receiving plate (23) is provided with a guide part (24) for the Bowden wires (4a, 5a), which guide part (24) can be inserted at the rear end of the receiving plate (23) by way of lateral cams (26) in recesses (27) in the receiving plate (23) and, for fastening to the central tunnel, is provided with at least one hook (28) which can be suspended in a corresponding recess in the central tunnel.

7. A foot-actuated parking brake according to one or more of the preceding Claims, **characterized in that** the connecting element (1) can be used for a right-hand drive and a left-hand drive vehicle, in such a way that the connecting element (1) can be connected, rotated through 180°, to the receiving plate (23) by way of the projecting portion (10), and the Bowden wire (3a) of the cable (3) of the pedal (2) is supported in the second projecting portion (12) which is set at an angle to the first projecting portion (11) for the left-hand drive vehicle.

## Revendications

1. Frein de stationnement à pied pour véhicules comportant des dispositifs de freinage disposés sur les roues arrière, lesquels peuvent être actionnés chacun par une pédale, par l'intermédiaire de câbles Bowden et câbles flexibles (3, 3a, 4, 4a, 5, 5a) et un élément de liaison, qui est relié aux câbles Bowden et câbles flexibles, est disposé entre la pédale (2) et les dispositifs de freinage, et l'élément de liaison (1) comprend un support à levier pivotant (13, 16) qui comporte, dans une partie de douille (16), un pivot (13) pour levier pivotant, **caractérisé en ce que** sont prévus des leviers pivotants (14, 15) disposés des deux côtés du pivot (13), un levier pivotant (14) étant relié au câble Bowden et câble flexible (3, 3a) du frein de stationnement à pied et les autres câbles Bowden et câbles flexibles (4, 4a, 5, 5a) étant reliés, par une pièce de liaison (18), à un tirant (17) pour les dispositifs de freinage.

2. Frein de stationnement à pied selon la revendication 1, **caractérisé en ce que** l'élément de liaison (1) est constitué d'une partie portante (6) en U avec des branches (8, 9) orientées, en position de montage, vers le bas depuis une traverse (7), la partie de douille (16) s'étendant transversalement aux branches (8, 9) et étant fixée en partie dégagée au-dessus de la traverse (7), dans une creux (19).

3. Frein de stationnement à pied selon les revendications 1 ou 2, **caractérisé en ce que** l'élément de liaison (1) présente, sur l'une (9) de ses branches, une partie saillante (10) pour la fixation, par une plaque de réception (23), sur un tunnel central de la carrosserie du véhicule, et l'autre branche (8) peut être fixée directement au tunnel central, et comporte des premières et deuxièmes parties coudées (11, 12) sur la branche (8), pour la fixation d'un câble Bowden et câble flexible (3, 3a) pour le câble (3) relié à la pédale (2), lequel peut être accroché dans le levier pivotant (14) disposé espacé de la partie coudée (11, 12).

4. Frein de stationnement à pied selon les revendications 1, 2 ou 3, **caractérisé en ce que** le pivot (13) est relié, pour le montage, à l'une (20a) de ses extrémités libres, au levier pivotant (15) pour le tirant (17), et présente, à son autre extrémité libre (20) opposée, une pièce rapportée polygonale (22) sur laquelle le levier pivotant (14) est maintenu et fixé par un perçage (21) de forme polygonale correspondante.

5. Frein de stationnement à pied selon une ou plusieurs des revendications précédentes, **caractérisé en ce que** la plaque de réception (23) présente, à une extrémité libre, dans une traverse (25), des perçages de réception (30, 31) pour les câbles Bowden (4a, 5a) des câbles (4, 5) menant aux deux freins, qui sont maintenus dans la pièce de liaison (18) fixée au tirant (17).

6. Frein de stationnement à pied selon les revendications 1 ou 5, **caractérisé en ce que** la plaque de réception (23) est pourvue d'une partie de guidage (24) pour les câbles Bowden (4a, 5a), laquelle peut être insérée à l'extrémité arrière de la plaque de réception (23), par des cames latérales (26), dans des découpes (27) de la plaque de réception (23), et est pourvue, pour la fixation au tunnel central, d'au moins un crochet (28) qui peut être accroché dans un évidement correspondant du tunnel central.

7. Frein de stationnement à pied selon une ou plusieurs des revendications précédentes, **caractérisé en ce que** l'élément de liaison (1) peut être utilisé pour un véhicule à conduite à droite, **en ce que**, pour le véhicule à conduite à droite, l'élément de liaison peut être relié, tourné de 180°, à la plaque de réception (23), par la partie saillante (10), et le câble Bowden (3a) du câble (3) de la pédale (2) est soutenu dans la deuxième partie saillante (12) qui est inclinée suivant un angle par rapport à la première partie saillante (1), pour le véhicule à conduite à gauche.
